# DEMANDE DE BREVET EUROPEEN

(11) **EP 1 748 107 A1**
(43) Date de publication de la demande: **31.01.2007**
(21) Numéro de dépôt: 06116906.6
(22) Date de dépôt: 10.07.2006
(51) Int. Cl.: E02D 5/24

(54) **Pieu en matière plastique, en particulier pour l'accrochage des moules en mytiliculture**

(30) Priorité: 25.07.2005 FR 0507879
(71) Demandeur: Celtiplast, 21270 Pontailler sur Saône (FR)
(72) Inventeur: GANDRE, Gérard, 70140, MONTSEUGNY (FR)
(74) Mandataire: Cardy, Sophie Marie

(57) **Abrégé**

L'invention concerne un pieu (10) comprenant une première partie (12) dont l'extrémité libre est pointue et est destinée à être plantée dans le sol (40) et une deuxième partie (14) destinée à être située au dessus du sol, la deuxième partie (14) étant formée d'un manchon et la première partie (12) ayant une extrémité de liaison opposée à son extrémité libre et qui est disposée à l'intérieur du manchon,

De façon caractéristique, le pieu (10) est formé en une seule pièce de matière plastique par extrusion avec une double filière comprenant une filière centrale pour extruder la première partie (12) et une filière extérieure pour extruder la deuxième partie (14), au moins partiellement autour de la première partie (12).

## Description

L'invention concerne un pieu, c'est-à-dire un élément allongé présentant une première partie enfoncée dans le sol et une deuxième partie s'étendant hors du sol, et son procédé de fabrication.

Plus précisément, l'invention concerne un pieu pouvant servir à de multiples usages, notamment d'élément de clôture ou encore de support.

Notamment, on utilise des pieux pour le support de végétaux grimpants ou encore dans le domaine de la mytiliculture pour l'accrochage des naissains de moules dans les moulières.

Habituellement, ces pieux sont réalisés en métal ou en bois.

Le bois est notamment utilisé en mytiliculture : des pieux réalisés à partir de troncs de chêne sont plantés dans le fond des moulières. Ces pieux sont utilisés en premier lieu pour la formation des naissains lorsque des cordes attachées entre ces pieux trempent dans l'eau. Ensuite, les naissains formés sur ces cordes sont disposés sur les pieux, soit par enroulement d'une corde sur un pieu, soit par formation d'une sorte de chaussette formée d'un filet en forme de tube contenant les naissains, qui est alors attachée sur un de ces pieux.

Lorsque le naissain est laissé sur la corde enroulée sur le pieu, on constate que le pieu en chêne présente des aspérités de surface propices à l'accrochage et au développement des moules.

Néanmoins, l'utilisation de bois en général, et du chêne en particulier, présente un certain nombre d'inconvénients. Il existe un temps de préparation et de traitement relativement long entre la coupe de l'arbre et le moment où le bois est prêt pour que le pieu soit planté. De plus, le bois est putrescible et il est donc nécessaire de remplacer les pieux au bout d'une durée de vie relativement courte. De telles opérations de renouvellement des pieux dans les moulières sont à la fois coûteuses et pénibles.

Le métal ne présente pas un aspect aussi naturel que le bois, il peut, selon le matériau utilisé s'oxyder ou devoir être repeint régulièrement, et son coût de fabrication est non négligeable et il ne répond pas aux contraintes d'utilisation dans l'eau, notamment en mytiliculture.

Des pieux en matière plastique ont également déjà été proposés.

Cependant, si l'on réalise un pieu en matière plastique d'une seule pièce, ce dernier est, d'une part, trop lourd pour être posé manuellement et, d'autre part, trop cher par rapport aux autres matériaux.

Les solutions proposées jusqu'alors ont donc consisté à utiliser deux pièces distinctes réunies l'une à l'autre, l'une étant plantée dans le sol et l'autre étant formée d'un manchon situé au-dessus du sol. Cependant, la nécessité de mettre en oeuvre successivement la fabrication de deux pièces, puis de réaliser une liaison, notamment par chevillage, prend encore un certain temps pour un prix de revient relativement important.

La présente invention a pour but de surmonter les inconvénients de l'art antérieur en proposant un pieu réalisé en matière plastique, et son procédé de fabrication, ce pieu étant léger, très simple à fabriquer et répondant à des usages très variés.

A cet effet, la présente invention propose un pieu comprenant une première partie dont l'extrémité libre est pointue et est destinée à être plantée dans le sol et une deuxième partie destinée à être située au dessus du sol, la deuxième partie étant formée d'un manchon et la première partie ayant une extrémité de liaison opposée à son extrémité libre et qui est disposée à l'intérieur du manchon,
caractérisé en ce que la deuxième partie est reliée à la première partie tout le long de l'extrémité de liaison par le fait que le pieu est formé en une seule pièce de matière plastique par extrusion avec une double filière comprenant une filière centrale pour extruder la première partie et une filière extérieure pour extruder la deuxième partie, au moins partiellement autour de la première partie.

De cette façon, on obtient très facilement, pratiquement par une seule opération d'extrusion, un pieu monobloc à la fois léger, car la deuxième partie ou partie haute est un manchon creux, résistant, et facile à planter grâce à la première partie.

En effet, après l'extrusion, il suffit de tailler une pointe à l'extrémité libre de la première partie pour finaliser un pieu utilisable tel quel.

De cette façon, on obtient un pieu pour un prix de revient réduit, qui peut être utilisé dans de nombreux domaines. Notamment, il est possible d'utiliser les différentes matières plastiques compatibles avec une extrusion (par exemple les polyoléfines telles que le polypropylène où le polyéthylène). En outre, il est possible d'ajouter différents adjuvants dans cette matière plastique, pour en modifier les propriétés (en y ajoutant par exemple des produits insecticides ou pesticides pour lutter de façon ciblée contre des agressions) ou la couleur (en y ajoutant des pigments, par exemple réfléchissants pour que le pieu soit visible la nuit).

Selon une disposition préférentielle, la première partie du pieu est un profilé comprenant au moins trois nervures ayant une section en forme de Y, de X, de croix ou d'étoile de plus de quatre branches. Une telle forme concilie les propriétés de légèreté, de résistance mécanique et de facilité pour planter le pieu dans le sol.

Avantageusement, au moins la deuxième partie comporte une surface externe rugueuse et est constituée d'un mélange de matière plastique et de matière végétale, ce par quoi elle forme un support d'accrochage. Cette matière végétale peut être constituée de sciure ou de copeaux de bois, ou de tous autres végétaux ou bien encore d'autres composés naturels.

De cette façon, on permet le recyclage de ces déchets végétaux ou tout en conférant au pieu un aspect extérieur plus naturel, en particulier plus proche du bois, ce relief rugueux en surface conférant en outre au pieu une meilleure compatibilité pour l'accrochage des végétaux ou bien le développement des moules.

Un tel pieu présente en outre une forme simple qui lui permet d'être associé à un ou plusieurs accessoires fabriqués séparément et venant compléter les fonctionnalités possibles et les avantages de ce pieu.

À cet effet, de façon préférentielle, le pieu comprend en outre une troisième partie en forme de tronc de cône creux, fendu depuis sa pointe selon une forme permettant l'insertion de la première partie en faisant coulisser autour de cette dernière la troisième partie. Cette troisième partie peut ainsi coulisser autour de la première partie jusqu'à la deuxième partie en forme de manchon qui se trouve ainsi obturée par le bas. De préférence, la fente est une ouverture de forme complémentaire à la section de la première partie.

Ce coulissement peut par ailleurs s'opérer lors de l'implantation du pieu dans le sol, après l'étape d'insertion, ce qui évite à ce moment-là la pénétration, voir le blocage, d'éléments tels que des cailloux ou des galets, dans le manchon constituant la deuxième partie. De cette façon, on évite les difficultés lors de l'installation du pieu ainsi qu'un alourdissement de ce dernier.

Également, le pieu comprend en outre, de façon préférentielle, une quatrième partie comportant un tronçon de liaison destinée à venir se bloquer à l'extrémité libre du manchon, éventuellement en s'y insérant, et un tronçon formé d'au moins une tige qui est destinée à empêcher la pose des oiseaux sur le pieu.

Une telle quatrième partie est notamment utile lorsque la deuxième partie est aérienne et forme un support de végétation, notamment dans les lieux publics tels que des jardins ou des parterres en milieu urbain, et constitue un moyen efficace pour éviter les pigeons.

Cette quatrième partie est également intéressante dans le cas où le pieu forme un support de mytiliculture pour l'accrochage des moules, l'extrémité libre de la première partie étant plantée dans le fond de la moulière et la deuxième partie étant au moins partiellement située dans l'eau. En effet, dans ce cas, la tige de la quatrième partie empêche que les oiseaux marins, notamment les goélands, qui viennent se poser sur le pieu et contribuent d'une part à endommager la partie supérieure des moules qu'ils viennent consommer, et d'autre part constituent une nuisance en polluant le naissain de moules par leurs déjections et en générant un risque de blessures pour les personnes travaillant dans la moulière.

Dans le cas de l'application précitée en mytiliculture, le pieu peut comporter en outre une cinquième partie présentant une bande entourant la deuxième partie et des éléments en forme de rubans ou de filaments s'étendant depuis la bande et aptes à flotter. Une telle cinquième partie située dans la partie basse de la deuxième partie, en-dessous du naissain, empêche la prédation des moules depuis le sol notamment par les crabes.

Dans le cas de l'application précitée en mytiliculture, le pieu peut également comporter en outre une sixième partie amovible comportant un tronçon de liaison destinée à venir se loger dans l'extrémité libre du manchon et un tronçon plus large que la deuxième partie ayant une extrémité libre tronconique. Cette sixième partie forme une pièce dite « martyr », le tronçon plus large restant au dessus de la deuxième partie et son extrémité tronconique coopérant en permettant son centrage avec une autre pièce, appelée la cloche, placée au dessus et sur laquelle on frappe avec un maillet lors de la pose pour effectuer l'enfoncement du pieu dans le sol.

Egalement, le pieu peut comprendre en outre des moyens d'attache des naissains et/ou des cordes, montés sur la deuxième partie, en dépassant de sa surface extérieure.

L'invention concerne aussi un procédé de réalisation d'un pieu.

L'invention a pour but de proposer un procédé permettant de manière simple, économique et reproductible, de fabriquer un tel pieu à la fois léger et suffisamment résistant mécaniquement pour de multiples applications.

Ce but est atteint par le procédé comportant les étapes suivantes :
- on fournit une double filière d'extrusion comprenant une filière centrale pour extruder une première partie destinée à être plantée dans le sol et une filière extérieure pour extruder une deuxième partie en forme de manchon entourant la première partie ;
- on réalise une première étape d'extrusion en alimentant seulement la filière centrale pour former uniquement la première partie,
- on réalise une deuxième étape d'extrusion en alimentant à la fois la filière centrale et la filière extérieure pour former simultanément la première et la deuxième parties reliées l'une à l'autre, sur toute leur longueur commune,
- on réalise une troisième étape d'extrusion en alimentant seulement la filière extérieure pour former uniquement la deuxième partie, et
- on taille une pointe à l'extrémité libre de la première partie.

Sans sortir du cadre de la présente invention, on comprend qu'il est tout à fait possible d'inverser la première étape et la troisième étape d'extrusion afin de réaliser en premier lieu la deuxième partie du pieu en alimentant lors de la première étape d'extrusion la filière extérieure, puis une deuxième étape d'extrusion inchangée (alimentation des deux filières), avant de réaliser enfin la première partie du pieu en alimentant uniquement la filière centrale lors de la troisième étape d'extrusion.

De préférence, la filière centrale présente une ouverture en forme de Y, de X, de croix ou d'étoile de plus de quatre branches.

Avantageusement, au moins la deuxième partie est constituée d'un mélange de matière plastique et de matière végétale de façon à présenter une surface externe rugueuse.

L'invention sera bien comprise et ses avantages apparaîtront mieux à la lecture de la description détaillée qui suit, d'un mode de réalisation de l'invention représenté à titre d'exemple non limitatif.

La description se réfère aux dessins annexés sur lesquels :
- la figure 1 représente une vue en perspective éclatée du pieu selon l'invention et de ses possibles accessoires non montés,
- la figure 2 représente le pieu de la figure 1 partiellement en transparence,
- les figures 3 et 4 représentent partiellement et de façon agrandie la partie basse du pieu et l'utilisation de la troisième partie, et
- la figure 5 représente une vue en perspective du pieu de la figure 1 avec les accessoires montés et servant de support d'un naissain de moules.

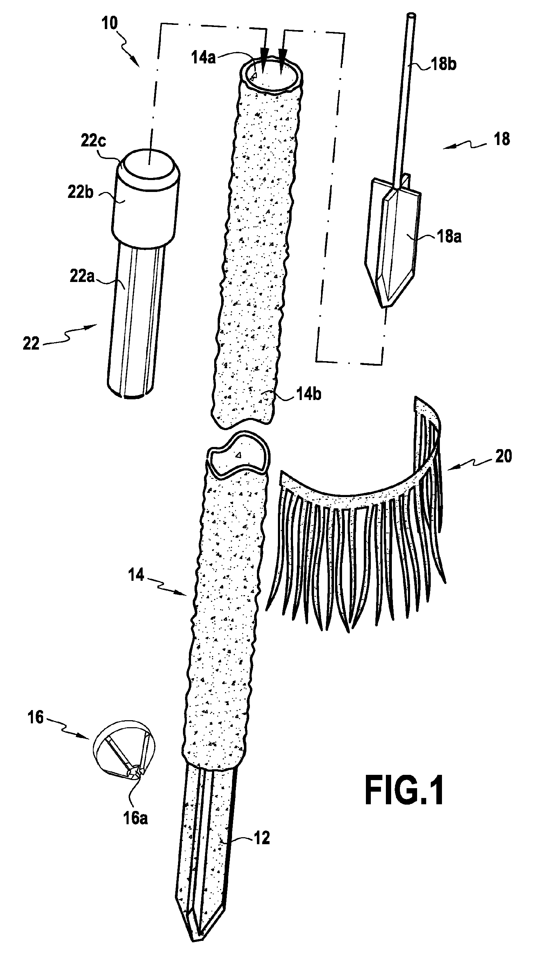

Sur la figure 1 est représenté un pieu 10 ainsi que différents accessoires pouvant équiper ce pieu 10 selon une application de support pour la croissance des moules en mytiliculture, donnée à titre d'exemple.

Selon l'invention, le pieu 10 est formé d'une première partie 12 et d'une deuxième partie 14 réalisées par le procédé de moulage par extrusion qui permet de réaliser un tube ou un profilé en continu, de le découper ensuite à la longueur souhaitée, ce tube ou profilé présentant ainsi sur toute sa longueur les mêmes caractéristiques dimensionnelles et de forme en section.

Plus précisément, la première partie 12 présente en section transversale une forme de croix à quatre nervures orthogonales deux à deux, ce qui lui permet d'être à la fois légère et résistante , notamment en flexion, son extrémité libre, formant la partie inférieure du pieu 10 étant taillée en pointe pour faciliter sa pénétration dans le sol lors de la pose du pieu 10. Il est bien entendu que cette première partie 12 peut présenter d'autres formes en section, en particulier une forme présentant au moins trois branches.

La deuxième partie 14 forme un manchon c'est-à-dire une pièce cylindrique de section transversale circulaire délimitant un logement 14a et dont la surface extérieure 14b constitue la surface d'accrochage et de développement des moules.

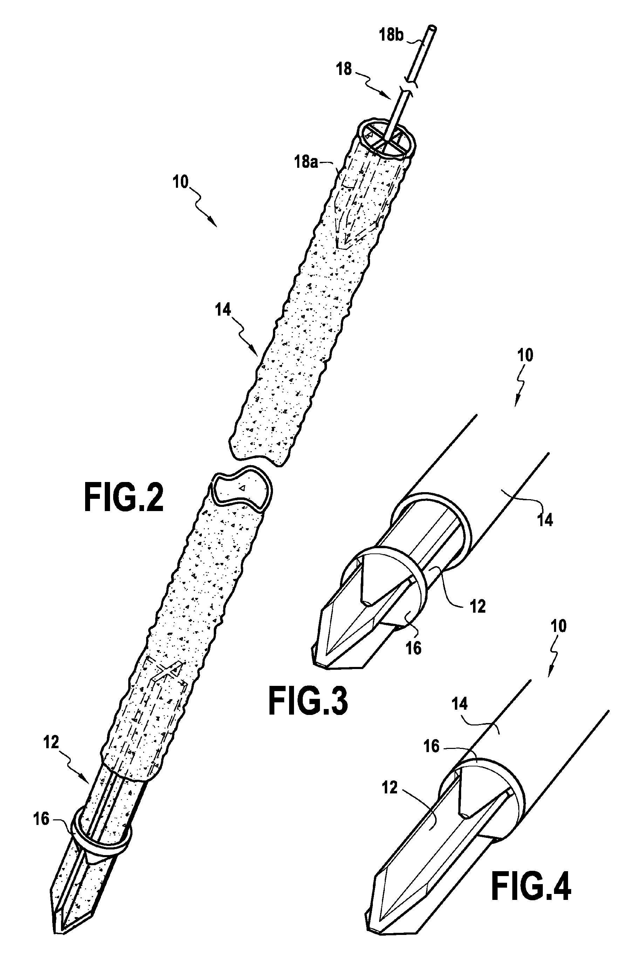

Selon la présente invention, ce procédé de fabrication par extrusion permet de réaliser le tronçon du pieu 10 formant la liaison entre la première partie 12 et la deuxième partie 14, au niveau duquel la première partie 12 est disposée à l'intérieur de la deuxième partie 14, simultanément par co-extrusion, ce qui génère une liaison complète à chaud entre ces deux pièces 12, 14 (voir la figure 2) tout le long de leur tronçon commun. À cet effet, on utilise une filière d'extrusion double comportant une filière centrale dont l'ouverture est constituée par une fente en forme de croix, de forme complémentaire à la section transversale de la première partie, et une filière extérieure dont l'ouverture forme un anneau dont le diamètre intérieur est sensiblement égal ou légèrement plus grand que le cercle circonscrit à la fente de la filière centrale.

Différents types de matières plastiques peuvent être utilisées parmi lesquels les polyoléfines, en particulier le polypropylène ou le polyéthylène.

Selon une disposition technique particulièrement avantageuse notamment pour l'application de ce pieu 10 en mytiliculture, on prévoit d'ajouter à cette matière plastique, au moins pour la matière alimentant la filière extérieure permettant la réalisation de la deuxième pièce 14 formant le manchon de support, des particules végétales, notamment du bois (sciure, copeaux....) ou d'autres composés de petite taille. De cette façon, on assure à la surface extérieure 14b de la deuxième partie une rugosité générée par un matériau naturel qui facilite l'accrochage et le développement des naissains de moules. De plus, dans ce cas, on assure un débouché pour un matériau considéré généralement comme un débris.

On se reportera maintenant aux figures pour comprendre quels sont les autres avantages de ce pieu 10, et notamment les possibilités qu'il offre pour le montage d'accessoires facilitant sa pose et/ou son utilisation.

En premier lieu, ce pieu 10 peut être complété par une troisième partie 16 en forme de cône creux, fendu depuis sa pointe selon une forme 16a compatible et complémentaire avec la forme en section transversale de la première partie 12, de sorte qu'il est possible d'insérer le pieu 10 au niveau de l'extrémité libre de la première partie 12 en forme de pointe. Le diamètre extérieur de la troisième partie 16 étant au moins égal au diamètre intérieur de la deuxième partie 14, cette troisième partie 16 permet d'obturer l'extrémité inférieure de la deuxième partie 14 autour de la première partie 12 (voir les figures 3 et 4).

On comprend que l'installation de cette troisième partie 16 qui forme un dispositif « anti galets » est rapidement effectué puisqu'il suffit d'emmancher la troisième partie 16 simplement à l'extrémité en forme de pointe de la première partie 12 (figure 3), le coulissement de la pièce 16 jusqu'à la deuxième pièce 14 conformément aux résultats de la figure 4 pouvant être réalisé manuellement ou bien naturellement lorsque le pieu 10 est enfoncé dans le sol, la troisième pièce 16 coulissant alors d'elle-même le long de la première pièce 12 en venant se bloquer en butée contre l'extrémité inférieure de la deuxième pièce 14 (figure 4).

On comprend donc que cette troisième pièce 16 est utilisable pour toutes les applications possibles du pieu 10 conforme à l'invention, puisqu'elle permet d'empêcher l'entrée d'éléments du sol à l'intérieur de la deuxième partie 14 en forme de manchon, ce qui a pour avantage d'éviter un blocage lors de la pose du pieu 10, notamment en présence de galets ou de petits rochers, et d'autre part de ne pas alourdir le pieu 10 si on souhaite le retirer ou le déplacer.

Également, comme il apparaît sur les figures 1, 2 et 5, le pieu 10 peut être complété par une quatrième partie 18 composée de deux tronçons.

En premier lieu, la quatrième partie 18 comporte un tronçon de liaison 18a destiné à être inséré et retenu dans le logement 14a depuis l'extrémité libre (extrémité supérieure) de la deuxième partie 14 : à titre d'exemple de réalisation, sur les figures ce tronçon de liaison 18a présente une forme avec une section transversale similaire à celle de la première partie 12, à savoir d'un profilé ayant une section transversale en forme de croix à quatre branches perpendiculaires deux à deux, l'extrémité inférieure de ce tronçon de liaison 18a étant taillée en pointe afin de faciliter son insertion à l'intérieur du logement 14a.

De façon alternative, notamment dans le cas où la première partie 12 remonte très haut à l'intérieur du logement de la deuxième partie 14, le tronçon de liaison peut être de forme différente pour se fixer à l'extrémité libre supérieure du pieu, par exemple en pinçant, à plusieurs emplacements, le bord supérieur de la paroi du manchon formant la deuxième partie 14.

Ensuite, la quatrième partie 18 comporte un tronçon supérieur 18b formé d'une tige reliée au centre du tronçon de liaison 18a et présentant une longueur pouvant varier entre quelques centimètres à quelques dizaines de centimètres, voir plus, pour un diamètre de l'ordre du centimètre.

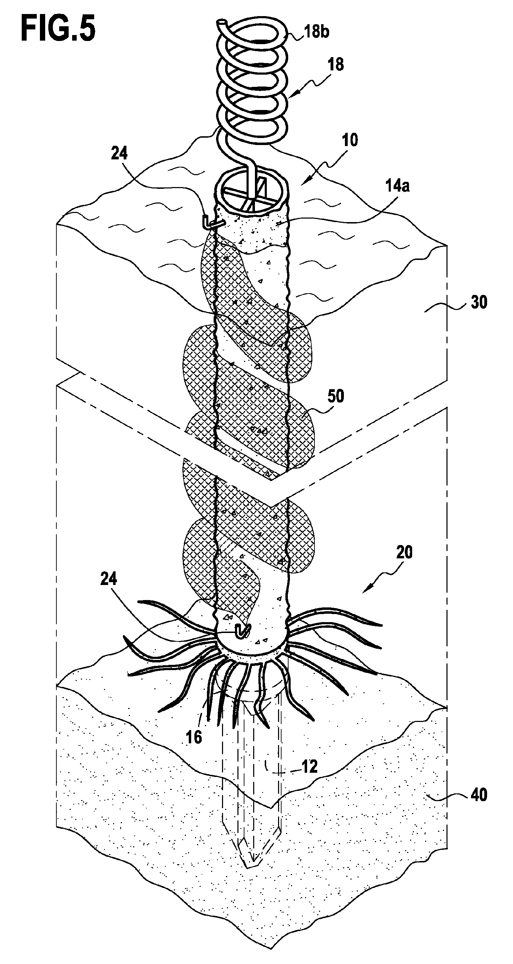

De cette façon, comme on peut le voir sur les figures 2 et 5, cette quatrième partie 18 surmonte le pieu 10, la tige 18b formant la partie supérieure du pieu 10, elle évite la pose d'un oiseau et notamment d'un prédateur pour les moules, tel que les goélands. Alternativement, on peut prévoir plusieurs tiges disposées côte à côte ou une tige spiralée pour mieux s'adapter au diamètre du pieu (voir la tige 18b de la figure 5).

Également, plus spécifiquement pour l'application en mytiliculture du pieu 10 conforme à l'invention, il est possible de lui adjoindre une cinquième partie 20 (voir figures 1 et 5) pouvant également être réalisée en matière plastique et qui est destinée à empêcher la prédation des moules par les crabes, à savoir la nidification des jeunes crabes à l'intérieur des moules. À cet effet, la cinquième partie comporte une bande 20a venant ceinturer la surface extérieure 14a de la deuxième partie 14, en particulier dans sa partie basse, en étant attachée et retenue de façon serrée grâce à des moyens d'attache (non représentés). La cinquième partie 20 comporte également, depuis cette bande 20a des éléments en forme de rubans ou de filaments qui sont susceptibles de flotter depuis la bande 20a lorsque cette zone est immergée dans l'eau 30, ce qui crée un obstacle empêchant la montée des crabes depuis le sol 40 de la moulière vers la surface extérieure de la deuxième partie 14 portant les naissains. De préférence, cette cinquième partie 20 est réalisée dans une matière autodégradable en 4 à 6 mois, par exemple dans une matière d'origine végétale.

Sur la figure 1, est également représentée une sixième partie 22 destinée à faciliter la pose du pieu 10 en formant un « martyr ». Pour ce faire, la sixième partie 22 comporte deux tronçons cylindriques de section circulaire et de diamètre différent. Le tronçon de liaison 22a (tronçon inférieur) présente un diamètre extérieur plus petit que le diamètre intérieur du logement 14a de la deuxième partie 14 afin d'y être inséré puis retiré aisément ; ce tronçon de liaison 22a est avantageusement fendu selon une forme de croix à quatre branches afin de permettre cette insertion même lorsque la première partie 12 en forme de croix remonte relativement loin à l'intérieur du logement 14a. Un tronçon supérieur 22b présente un diamètre extérieur plus important que le diamètre intérieur du logement 14a afin de rester au dessus de la deuxième partie 14. De plus, il est prévu que l'extrémité libre du tronçon supérieur 22b présente une extrémité libre 22c tronconique : de cette façon, cette forme en tronc de cône confère à la sixième partie 22 une fonction de centrage pour la cloche (non représentée) qui est posée par-dessus cette sixième partie 22 et sur laquelle l'opérateur vient frapper pour enfoncer ici le pieu 10 dans le sol 40.

En outre, il est prévu que le pieu 10 peut être également équipé de moyens de fixation 24 (voir la figure 5) disposés à (un ou) deux emplacements relativement éloignés l'un de l'autre le long de la deuxième partie 14 et permettant l'attache des naissains 50, que ceux-ci présentent la forme d'un tube enroulé en hélice comme sur la figure 5, ce tube contenant la corde portant le naissain, ou bien qu'ils se présentent sous la forme de la corde portant le naissain directement enroulée en hélice tout le long de la deuxième partie 14, éventuellement sur plusieurs hauteurs.

Dans tous les cas, la rugosité du pieu facilite la tenue des moules sur le pieu, en particulier la résistance aux paquets de mer qui ont tendance à décrocher les moules, notamment sur un pieu lisse.

Ce pieu 10 peut évidemment être utilisé à d'autres applications réalisant un support ou non : support pour une plante grimpante d'ornement ou potagère, ou bien pour une clôture ou d'autres éléments de mobilier urbain.

L'utilisation d'une matière plastique et de la technique d'extrusion permettent de conférer au pieu 10 différentes apparences en faisant varier sa longueur, sa couleur (par ajout de pigments), son apparence (possibilité de le rendre rugueux en surface, aspect réfléchissant avec des inclusions brillantes), ses propriétés sanitaires (ajout d'un médicament ou de produits phytosanitaires...).

## Revendications

1. Pieu (10) comprenant une première partie (12) dont l'extrémité libre est pointue et est destinée à être plantée dans le sol (40) et une deuxième partie (14) destinée à être située au dessus du sol, la deuxième partie (14) étant formée d'un manchon et la première partie ayant une extrémité de liaison opposée à son extrémité libre et qui est disposée à l'intérieur du manchon,
**caractérisé en ce que** la deuxième partie (14) est reliée à la première partie (12) tout le long de l'extrémité de liaison par le fait que le pieu est formé en une seule pièce de matière plastique par extrusion avec une double filière comprenant une filière centrale pour extruder la première partie (12) et une filière extérieure pour extruder la deuxième partie (14), au moins partiellement autour de la première partie.

2. Pieu (10) selon la revendication 1, **caractérisé en ce que** la première partie (12) est un profilé comprenant au moins trois nervures ayant une section en forme de Y, de X, de croix ou d'étoile de plus de quatre branches.

3. Pieu (10) selon la revendication 1 ou 2, **caractérisé en ce qu'**au moins la deuxième partie (14) comporte une surface externe rugueuse et est constituée d'un mélange de matière plastique et de matière végétale, ce par quoi elle forme un support d'accrochage.

4. Pieu (10) selon l'une quelconque des revendications précédentes, **caractérisé en ce qu'**il comprend en outre une troisième partie (16) en forme de tronc de cône creux, fendu depuis sa pointe selon une forme permettant l'insertion de la première partie (12) en faisant coulisser autour de cette dernière la troisième partie (16).

5. Pieu (10) selon l'une quelconque des revendications précédentes, **caractérisé en ce qu'**il comprend en outre une quatrième partie (18) comportant un tronçon de liaison (18a) destinée à venir se bloquer à l'extrémité libre du manchon et un tronçon supérieur (18b) formé d'au moins une tige qui est destinée à empêcher la pose des oiseaux sur le pieu (10).

6. Pieu (10) selon l'une quelconque des revendications précédentes, **caractérisé en ce que** la deuxième partie (14) est aérienne et forme un support de végétation.

7. Pieu (10) selon l'une quelconque des revendications 3 ou 4, **caractérisé en ce qu'**il forme un support de mytiliculture pour l'accrochage des moules, l'extrémité libre de la première partie (12) étant plantée dans le fond de la moulière et la deuxième partie (14) étant au moins partiellement située dans l'eau (30).

8. Pieu (10) selon la revendication 7, **caractérisé en ce qu'**il comprend en outre une cinquième partie (20) présentant une bande (20a) entourant la deuxième partie (14) et des éléments en forme de rubans ou de filaments s'étendant depuis la bande et aptes à flotter.

9. Pieu (10) selon la revendication 7 ou 8, **caractérisé en ce qu'**il comprend en outre une sixième partie (22) amovible comportant un tronçon de liaison (22a) destinée à venir se loger dans l'extrémité libre du manchon et un tronçon supérieur (22b) plus large que la deuxième partie ayant une extrémité libre (22c) tronconique.

10. Pieu (10) selon l'une quelconque des revendications 7 à 9, **caractérisé en ce qu'**il comprend en outre des moyens de fixation (24) des naissains montés sur la deuxième partie (14).

11. Procédé de fabrication d'un pieu (10), **caractérisé en ce qu'**il comporte les étapes suivantes :
- on fournit une double filière d'extrusion comprenant une filière centrale pour extruder une première partie (12) destinée à être plantée dans le sol et une filière extérieure pour extruder une deuxième partie (14) en forme de manchon entourant la première partie (12) ;
- on réalise une première étape d'extrusion en alimentant seulement la filière centrale pour former uniquement la première partie (12),
- on réalise une deuxième étape d'extrusion en alimentant à la fois la filière centrale et la filière extérieure pour former simultanément la première et la deuxième parties (12, 14) reliées l'une à l'autre,
- on réalise une troisième étape d'extrusion en alimentant seulement la filière extérieure pour former uniquement la deuxième partie (14), et
- on taille une pointe à l'extrémité libre de la première partie (12).

12. Procédé de fabrication d'un pieu (10) selon la revendication 11, **caractérisé en ce que** la filière centrale présente une ouverture en forme de Y, de X, de croix ou d'étoile de plus de quatre branches.

13. Procédé de fabrication d'un pieu (10) selon la revendication 11 ou 12, **caractérisé en ce qu'**au moins la deuxième partie (14) est constituée d'un mélange de matière plastique et de matière végétale de façon à présenter une surface externe rugueuse.
